# FASCICULE DE BREVET EUROPEEN

(11) **EP 0 912 906 B1**
(45) Date de publication et mention de la délivrance du brevet: **20.06.2001**
(21) Numéro de dépôt: 97934594.9
(22) Date de dépôt: 18.07.1997
(51) Int. Cl.: G01S 15/42

(54) **PROCEDE ET DISPOSITIF DE LUTTE HELIPORTEE CONTRE LES MINES SOUS-MARINES**
VERFAHREN UND VORRICHTUNG ZUR BEKÄMPFUNG VON UNTERWASSERMINEN VOM HUBSCHRAUBER AUS
METHOD AND DEVICE FOR HELICOPTER-BORNE MINE COUNTERMEASURES

(30) Priorité: 19.07.1996 FR 9609083
(43) Date de publication de la demande: 06.05.1999
(73) Titulaire: THOMSON MARCONI SONAR SAS, 06903 Sophia Antipolis (FR)
(72) Inventeur: PEYNAUD, François, 94117 Arcueil Cedex (FR); VERVEUR, Jean, 94117 Arcueil Cedex (FR); LAGAIN, Henri, 94117 Arcueil Cedex (FR); ABOMNES, Pascal, 94117 Arcueil Cedex (FR)
(74) Mandataire: Desperrier, Jean-Louis
(86) Numéro de dépôt international: FR9701342
(87) Numéro de publication internationale: WO9803883

(56) Documents cités:
- EP-A- 0 264 320
- EP-A- 0 494 092
- GB-A- 2 093 996
- US-A- 5 155 706
- US-A- 5 287 330
- US-A- 5 323 362

## Description

La présente invention se rapporte aux procédés et aux dispositifs de lutte héliportée contre les mines sous-marines dans lesquels les moyens utilisés pour chasser les mines sont suspendues sous un hélicoptère qui permet d'immerger ces moyens au bout d'un câble électro-porteur. Ceci permet, d'une part de limiter les risques de destruction par explosion des mines uniquement à la destruction de ces moyens, en protégeant le porteur, et d'autre part d'augmenter la rapidité de déploiement d'un tel système.

On connaît des systèmes comportant des dragues à influence magnétique ou acoustique et des sonars latéraux qui sont tractés par de gros hélicoptères de fort tonnage, du type MH53 par exemple, entièrement dédiés à cette mission. Ces systèmes sont toutefois encombrants, lourds et coûteux, ce qui nécessite l'usage d'un hélicoptère de très grande taille que l'on ne peut pas embarquer sur un navire porteur de tonnage moyen, tel qu'une frégate par exemple. L'emploi de ses systèmes est donc très limité.

Par ailleurs les sonars embarqués dans ces systèmes sont du type à balayage latéral et ne sont donc pas adaptés à la détection des mines à orin. En outre le principe même du sonar à balayage latéral implique qu'il fonctionne par avancement continu de ses antennes et donc de leur porteur. Dans ces conditions, quand un objet suspect est localisé il est difficile de revenir en arrière pour le relocaliser et déterminer avec précision la nature de cet objet (classification).

Ces difficultés empêchent de compléter le système par un dispositif de destruction des mines qui soit embarqué dans l'hélicoptère de repérage. Or ce besoin de destruction suivant immédiatement le repérage de la mine est une nécessité lorsque les hélicoptères patrouillent à l'avant d'une flotte pour en assurer sa protection.

On connaît par ailleurs, notamment d'un brevet français déposé par THOMSON-CSF le 28 novembre 1986 sous le n° 86 13485 et publié le 1er avril 1988 sous le n° 2 604 530, un dispositif de lutte anti-sous-marine dans lequel on utilise un sonar en forme de dôme allongé de faible poids et de faible encombrement suspendu au bout du câble électro-porteur d'un treuil, lui même situé dans un hélicoptère de faible tonnage.

Ce sonar comprend un ensemble de bras se dépliant en forme de parapluie et supportant à leurs extrémités des capteurs acoustiques, ce qui permet d'obtenir une antenne de grandes dimensions lorsque les bras sont déployés. Pour la montée et pour la descente du dôme les bras sont repliés. Ce sonar permet de localiser les sources de bruit, par exemple, les sous-marins qui sont immergés au fond de la mer.

On connaît aussi du brevet GB-A-2 093 996, un dispositif de détection de cibles sous-marines comprenant un corps cylindrique, une antenne d'émission intégrée dans ce corps, et une antenne de réception sonar formée de bras déployables accrochés et munis d'un ensemble de capteurs de réception.

Ce brevet ne divulgue que l'utilisation de cinq paires de bras déployables ayant des tiges verticales portant des transducteurs et coopérant avec un émetteur acoustique qui rayonne uniformément en azimut et avec une ouverture définie dans le plan vertical.

Pour pallier les inconvénients cités plus haut, l'invention propose un dispositif selon les revendications annexées.

D'autres particularités et avantages de l'invention apparaîtront clairement dans la description suivante, faite en regard des figures annexées qui représentent :
- la figure 1, une vue en perspective cavalière d'un dôme sonar selon l'invention ;
- la figure 2, une vue partielle de dessous de ce dôme sonar ;
- la figure 3, le schéma du déminage d'une route maritime ; et
- les figures 4 et 5, les schémas du fonctionnement selon deux modes distincts d'un sonar selon l'invention.

Actuellement toutes les flottes de combat embarquent des hélicoptères, dont un certain nombre sont de taille relativement réduite et comportent un treuil dont les spécifications sont sensiblement standardisées, ce qui permet d'immerger une charge elle-même relativement standardisée.

Le sonar dit "trempé" décrit dans le brevet cité plus haut est lui-même un appareil pratiquement standard et qui est très largement répandu. En fonctionnement le dôme de ce sonar est fixé au bout du câble électro-porteur d'un treuil, ce qui permet de le faire descendre et remonter rapidement. Ce dôme est réuni au câble électro-porteur par une prise à connexion et déconnexion rapides. Ce câble électro-porteur et cette prise permettent alors d'alimenter le sonar en énergie électrique depuis l'hélicoptère, et de ramener les signaux de mesure depuis le dôme jusqu'à l'hélicoptère. Eventuellement des signaux de commande peuvent être adressés depuis l'hélicoptère jusqu'au dôme.

L'invention propose donc d'aménager un tel dôme sonar en remplaçant les antennes déployables du type parapluie par un ensemble d'antennes d'émission fixes et de réception déployables et de rajouter des propulseurs eux-mêmes déployables permettant à la fois de stabiliser le dôme en azimut et de faire varier cet azimut pour couvrir un secteur de détection suffisamment large .

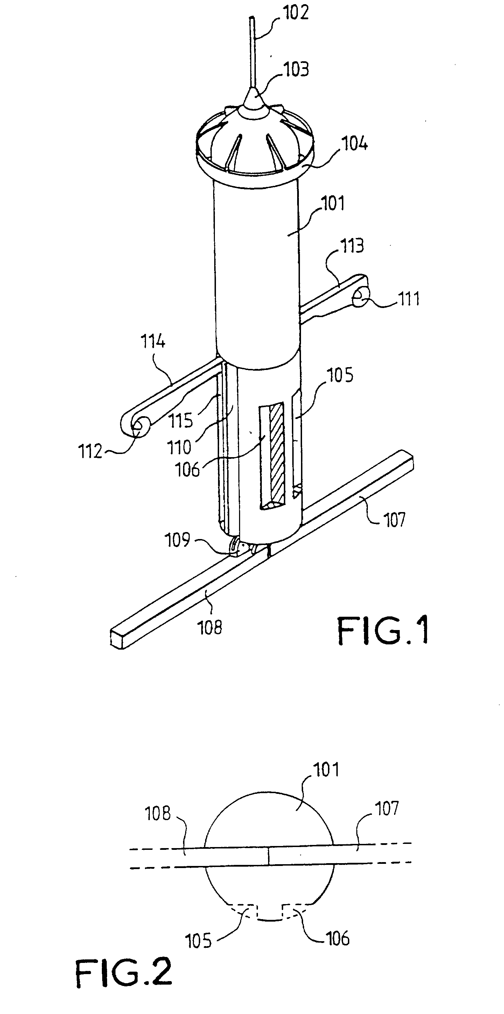

Un tel dôme est représenté en perspective cavalière sur la figure 1 où l'on remarque le corps du dôme 101 relié au câble électro-porteur 102 par une prise rapide 103 et comportant à sa partie supérieure un anneau de stabilisation hydrodynamique 104. Ces éléments sont tout à fait semblable à ceux du sonar "trempé" développé par la Demanderesse et décrit notamment dans le brevet cité plus haut.

En revanche, en ce qui concerne les organes acoustiques, ceux-ci comportent tout d'abord, suivant la réalisation préférée, deux antennes d'émission verticales 105 et 106 placées dans des ouvertures étroites en forme de gouttières s'étendant longitudinalement le long du corps 101 à la surface de celui-ci. Les faces d'émission de ces antennes sont situées dans un même plan qui est parallèle aux faces de réception des deux antennes 107/108, comme représenté sur la figure 2 dans une vue de dessous de ce corps.

Dans une variante de réalisation, l'antenne d'émission est unique et est située dans une gouttière semblable à celles qui contiennent les antennes 105 et 106, mais située au milieu de l'emplacement de ces deux dernières.

Les signaux acoustiques émis par ces antennes d'émissions sont réfléchis par les objets, les mines par exemple, situés sur leur trajet. Les échos correspondants retournent vers le dôme 101 selon la technique bien connu du sonar.

Ces signaux réfléchis sont reçus par une antenne de réception formée d'un ensemble d'hydrophones réunis dans les deux éléments longitudinaux 107 et 108, en forme de bras qui forment des demi-antennes. En position de réception celles-ci sont placées bout à bout en dessous de l'extrémité du corps 101, perpendiculairement à l'axe de ce corps et dans un plan parallèle au plan contenant les antennes d'émissions 105 et 106.

Selon l'invention, ces demi-antennes sont articulées sur le corps 101 par des moyens d'articulation en forme de charnières 109 qui permettent de les faire pivoter par rapport à la base de ce corps et venir s'escamoter dans des gouttières 110 ménagées sur la surface du corps 101 longitudinalement à l'axe de celui-ci. Dans la position repliée, non représentée sur les figures, les demi-antennes 107 et 108 s'encastrent parfaitement dans le corps 101, ce qui permet à la fois d'éliminer les efforts d'hydrodynamiques au niveau de cette antenne lorsque le sonar complet descend ou remonte très rapidement sous l'action du câble électro-porteur 102 actionné par le treuil contenu dans l'hélicoptère. En outre cette position repliée permet de venir loger le dôme sonar dans un réceptable cylindrique, dit "funnel", situé à bord de l'hélicoptère et qui permet d'assurer le rangement de ce dôme pendant les manoeuvres de l'hélicoptère. Dans la position dépliée, les deux extrémités viennent pratiquement se toucher, comme s'il y avait qu'une seule antenne.

Comme il est bien clair qu'un tel dôme sonar tourne relativement librement autour de son axe, puisqu'il est suspendu au câble électro-porteur 102, il est généralement nécessaire de le stabiliser en azimut lorsque qu'il est à poste au sein de l'eau.

Par ailleurs, contenu des caractéristiques acoustiques des sonars utilisés pour la détection et la classification des mines, le secteur angulaire couvert par un tel ensemble d'émission/réception est relativement étroit. Pour pouvoir satisfaire aux besoins opérationnels, il est nécessaire de surveiller le fond de la mer et le sein des eaux sur un secteur beaucoup plus large, en orientant, de préférence de manière mécanique, l'ensemble des antennes autour de l'axe vertical du corps .

Pour cela, le dôme comporte deux petits propulseurs 111 et 112, ayant par exemple la forme d'hélices carénées, situés aux extrémités des deux bras escamotables 113 et 114.

Ces propulseurs peuvent fonctionner dans un sens ou dans l'autre, pour appliquer par action différentielle un couple permettant de faire tourner le corps 101 autour de son axe longitudinal. Associés à des moyens de mesure de l'azimut de ce corps autour de son axe longitudinal, inclus dans le corps et de type connu, on peut ainsi à la fois stabiliser en azimut le corps, et donc les faisceaux d'émission et réception des antennes, et l'orienter de manière quelconque, pour obtenir par exemple un balayage de l'ensemble de la zone à détecter.

Les bras 113 et 114 permettent d'obtenir un couple suffisant avec des propulseurs de faible consommation, quelques Watts, mais ils provoquent un encombrement du même ordre de grandeur que celui des demi-antennes 107 et 108.

Pour pouvoir alors procéder à l'immersion et à la remontée du sonar dans les mêmes conditions que celle vues précédemment, ces bras 113 et 114 sont fixés au corps 101 de manière articulée pour pouvoir s'escamoter dans des gouttières 115 elles aussi ménagées dans le corps 101 parallèlement aux gouttières 110 permettant d'escamoter les demi-antennes 107 et 108.

Un servomécanisme de type connu, fonctionnant à partir des indications du détecteur d'azimut du type compas contenu dans le corps 101, permet de maintenir cet azimut de manière fixe par rapport à une valeur de consigne reçue depuis l'hélicoptère par l'intermédiaire du câble 102, ou de le faire varier de manière régulière et connue par avance autour de cette valeur de consigne, éventuellement en fonction des ordres reçus depuis l'hélicoptère, toujours par le câble 102.

Comme on le remarque sur la figure 1, les dimensions des demi-antennes 107 et 108 et des bras 113 et 114, fixées pour les premières de manière connue par les fréquences utilisées dans les fonctions de détection et de classification des mines, et pour les deuxièmes par un compromis sur la puissance et la consommation des propulseurs, sont telles que ces bras sont situés, ainsi que les gouttières d'escamotage 110 et 115, sensiblement dans la moitié inférieure du dôme 101.

La moitié supérieure de ce dôme permet alors de contenir les circuits électroniques qui réalisent les différentes fonctions nécessaires au sonar, en particulier les alimentations électriques, les circuits d'émission avec compensation d'inclinaison par pondération en phase selon une méthode connue, les circuits de réception et de numérisation des antennes selon une méthode connue, et les circuits d'interface de contrôle de tous les capteurs, en particulier les capteurs de température, d'immersion, d'altitude, et de références de verticale et d'azimut.

Il comprend également les circuits de contrôle et de commande de l'asservissement en azimut ainsi que les circuits d'interface avec le câble 102 permettant de recevoir les signaux de commande et d'alimentation de puissance, ainsi que de transmettre vers l'hélicoptère les données reçues depuis les différents capteurs.

Ces informations numériques des différents capteurs, en particulier celles des antennes sonars, sont multiplexées et traitées à bord de l'hélicoptère, puis présentées de manière connue à l'opérateur qui fait fonctionner le système.

Les demi-antennes 107 et 108 ainsi que les bras 113 et 114 sont déployés et rétractés à l'aide de vérins électriques commandés par les circuits situés dans le container électronique à partir des différents ordres émis par le poste de commande situé dans l'hélicoptère, soit directement, soit par l'intermédiaire d'une logique simple fonctionnant à partir des signaux de commande de montée et de descente, et d'arrêt et de marche du sonar.

Ces vérins sont conçus, de manière connue, de telle sorte qu'en cas de panne du système ils commandent systématiquement le repliement des différents bras, éventuellement par l'intermédiaire d'un débrayage automatique de ces vérins et l'action de ressorts de rappel.

En outre, en cas de panne totale entraînant même un blocage des bras en position ouverte, ceux-ci sont conçus, de manière connue, pour se briser et s'arracher sans endommager le corps du sonar et les organes qui y sont contenus.

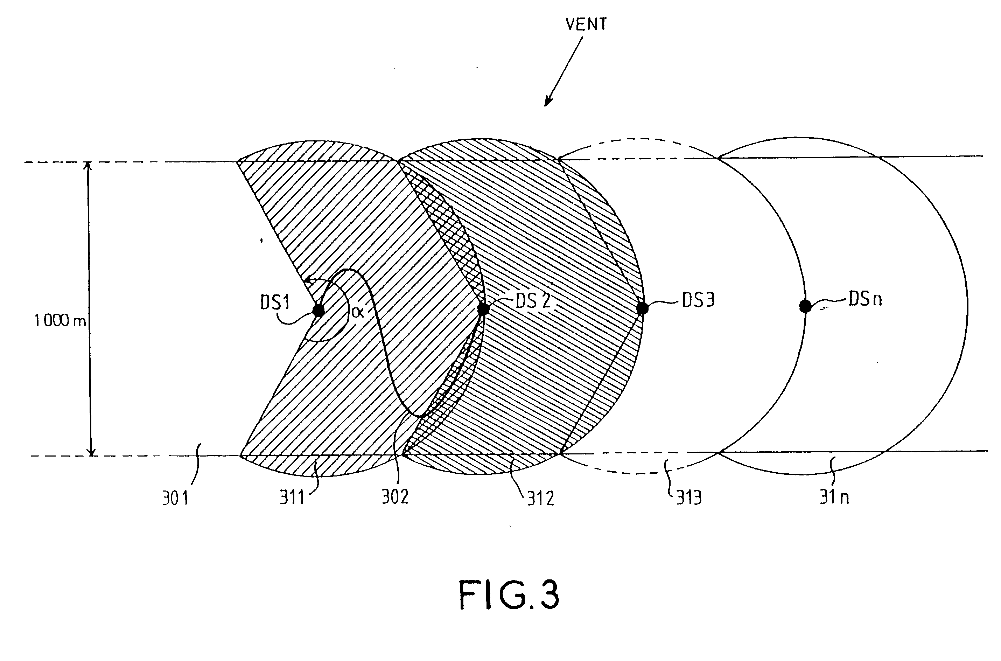

A la différence des systèmes actuels, qui sont montés sur de gros hélicoptères et utilisés en traction pour balayer le terrain, le système selon l'invention peut être utilisé de manière toute différente en effectuant une succession d'immersions réalisées en point fixe avec l'hélicoptère volant en mode stationnaire, comme représenté sur la figure 3.

Sur cette figure, l'hélicoptère procède au déminage d'une route 301, large de mille mètres par exemple, en procédant à une série de points fixes DS1 à DSn.

A chaque point fixe, il immerge son sonar et procède à une exploration d'une zone ayant la forme d'un secteur circulaire d'angle α. Dans cette zone, un premier balayage permet de détecter des objets suspects. Ceux-ci sont ensuite classifiés en commutant les fréquences d'exploration et en fixant le balayage sur eux. Le cas échéant, l'hélicoptère se déplacera jusqu'à l'objet identifié comme une mine et larguera un dispositif de destruction.

La distance entre les points fixes successifs DS1 à DSn est choisie pour que les zones 311 à 31n couvrent la totalité de la route à déminer, en se recouvrant légèrement.

Dans le cas présent, pour une route large de mille mètres une distance de 600 mètres entre les points fixes est suffisante.

Dans ces conditions, et en tenant compte d'un vent de travers défavorable, tel que représenté sur la figure, qui impose à l'hélicoptère de suivre une route 302 en lacets fortement prononcés, on arrive à faire progresser l'hélicoptère, en utilisant les matériels, treuils et hélicoptères en particuliers, couramment utilisé pour les systèmes de sonar trempés, à une vitesse moyenne de 8 noeuds le long de la route. Ceci correspond à un intervalle de 2 mn 30 s entre les emplacements de deux points fixes successifs.

Cet intervalle permet de parcourir le chemin entre un point fixe et le suivant, de faire descendre le sonar, de procéder à la détection et à la classification, de remonter le sonar, et de se rendre à l'emplacement du point fixe suivant.

Une telle vitesse de 8 noeuds est tout à fait satisfaisante dans bien des cas. Si l'on à besoin d'aller plus vite, on plus utiliser plusieurs hélicoptères travaillant simultanément sur la même route.

Pour obtenir un maximum de performances dans un minimum d'encombrement et de poids, on utilisera un système qui fonctionne selon trois modes correspondant chacun à une fréquence centrale distincte.

Ces fréquences sont classiquement appelées A, B et C par valeurs décroissantes de la fréquence et correspondent par exemple à 350, 250 et 150 kHz.

Le premier mode, utilisant la fréquence C, ou la fréquence B si la structure des fonds en rend la détection difficile, est un mode de détection des mines à orin ou des mines de fond.

Le deuxième mode, utilisant la fréquence B, est un mode de classification des mines à orin .

Le troisième mode, utilisant la fréquence A, est un mode de classification des mines de fond.

L'antenne horizontale a une longueur déployée d'environ 1 mètre et permet de recevoir les trois fréquences A, B et C en utilisant la technologie connue multibandes. Elle est décomposée de manière connue en N capteurs de réception permettant de former M voies couvrant un secteur angulaire sur le terrain. La largeur de ces voies et la largeur du secteur dépendent des fréquences utilisées.

Comme la hauteur de l'antenne est faible, l'ouverture du lobe de réception en site est très large et il n'est donc pas nécessaire de stabiliser ce lobe.

La technologie multibandes qui permet de réaliser une telle antenne de réception est en particulier connue d'un brevet français déposé par THOMSON-CSF le 8 juillet 1994 sous le n° 94 08474 et publié le 12 janvier 1996 sous le n° 2 722 358.

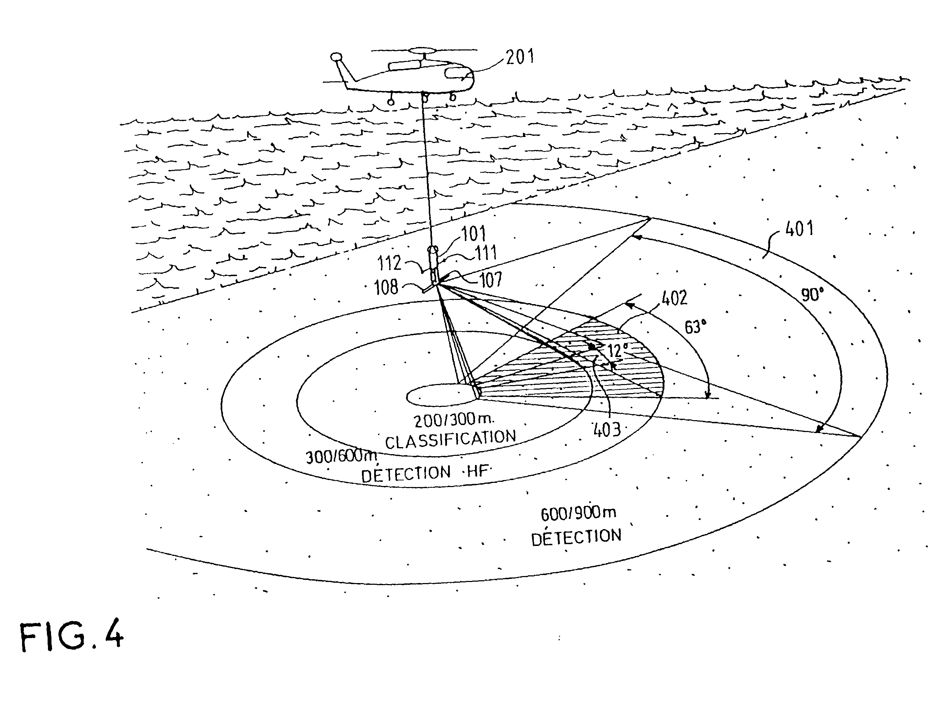

On a représenté sur la figure 4 un exemple de réalisation des zones ainsi balayées sur le fond de la mer par les faisceaux de réception.

Sur cette figure, le dôme sonar 101 est suspendu à l'hélicoptère 201 par le câble 102.

Selon les fréquences utilisées, l'antenne de réception 107/108 surveille sur le fond de la mer un secteur de détection 401 pouvant s'étendre jusqu'à 600/900 mètres avec une ouverture de 90° et correspondant à l'utilisation de la basse fréquence de détection C.

En utilisant la haute fréquence de détection B, on couvre alors un secteur 402 pouvant s'étendre jusqu'à 300/600 mètres et ayant une ouverture de 63 °.

Pour la classification, en utilisant la haute fréquence de classification A, on obtient un secteur 403 qui s'étend seulement jusqu'à 200/300 mètres avec une ouverture de 12°.

Les secteurs de détection sont formés de voies de détections juxtaposées larges de 1° et permettant donc une résolution horizontale de 1°. Il y a ainsi 90 voies dans le secteur 401 et 63 voies dans le secteur 402.

Pour la classification par contre, où la résolution doit être beaucoup plus importante, on utilise des voies larges de 0,2°. Le secteur 403 comprend donc 60 voies de classification.

Comme le secteur 401, qui est le plus large, ne couvre manifestement pas la surface nécessaire, telle que représentée sur la figure 3, les propulseurs 111 et 112 permettent d'orienter mécaniquement l'antenne 107/108, de manière à déplacer les secteurs 401 à 403 pour obtenir la couverture souhaitée sur le sol.

En ce qui concerne l'antenne d'émission, pour n'insonifier que la zone utile, on alimente, selon une technique connue, les différents transducteurs des antennes d'émission verticale avec des signaux présentant des phases permettant d'obtenir un lobe relativement directif en site, qui est pointé sensiblement vers le centre du secteur à insonifier.

Dans ces conditions, l'extrémité supérieure du lobe correspond sensiblement à la limite extrême du secteur à insonifier. La réduction du niveau du signal émis correspondant à l'approche de l'extrémité inférieure de ce lobe est compensée au niveau du fond de la mer par l'absorption plus faible correspondant à la distance elle-même plus faible à ce niveau entre l'antenne d'émission et le fond de la mer.

L'antenne d'émission ayant des caractéristiques directives, une telle stabilisation en site est alors nécessaire.

Pour cela on utilise les indications de verticale délivrées par un capteur situé dans le dôme sonar, et l'on corrige les phases des signaux d'émission des différents transducteurs de cette antenne d'émission, de manière à garder une orientation en site sensiblement constante, selon une technique connue.

En ce qui concerne l'ouverture du lobe d'émission en gisement, on se trouve dans la situation inverse de l'antenne de réception, puisque l'antenne d'émission est de faible largeur, et on obtient donc naturellement un lobe d'émission suffisamment large pour couvrir toute la zone insonifiée correspondant à la zone surveillée par l'antenne de réception.

Le produit émission X réception assure donc les directivités nécessaires pour ce système, selon le principe connu des antennes croisées (mill-cross array).

Selon une réalisation préférée, on utilise l'une des deux antennes verticales pour émettre les fréquences A et B, et l'autre pour émettre la fréquence C, ce qui permet de simplifier la conception de ces antennes. Il est toutefois possible d'utiliser une seule antenne verticale située au milieu de l'emplacement décrit pour les deux antennes sur la figure 1 et permettant alors d'émettre les trois fréquences A, B et C.

La classification des mines à orin présente un problème particulier, puisque celle-ci sont immergées entre deux eaux, en étant maintenue dans cette position par l'orin qui les relie à un corps mort gisant sur le fond de la mer.

Dans ces conditions, la classification proprement dite, qui consiste à distinguer les mines des autres objets, tels que des rochers, à l'aide d'un sonar à haute fréquence donnant une image très précise de l'objet à classifier, n'est pas nécessaire, puisqu'à priori un tel objet immobile entre deux eaux correspond bien à une mine à orin.

Il devient par contre nécessaire de déterminer avec précision cette immersion, ce qui n'est pas possible avec le simple système des antennes croisées.

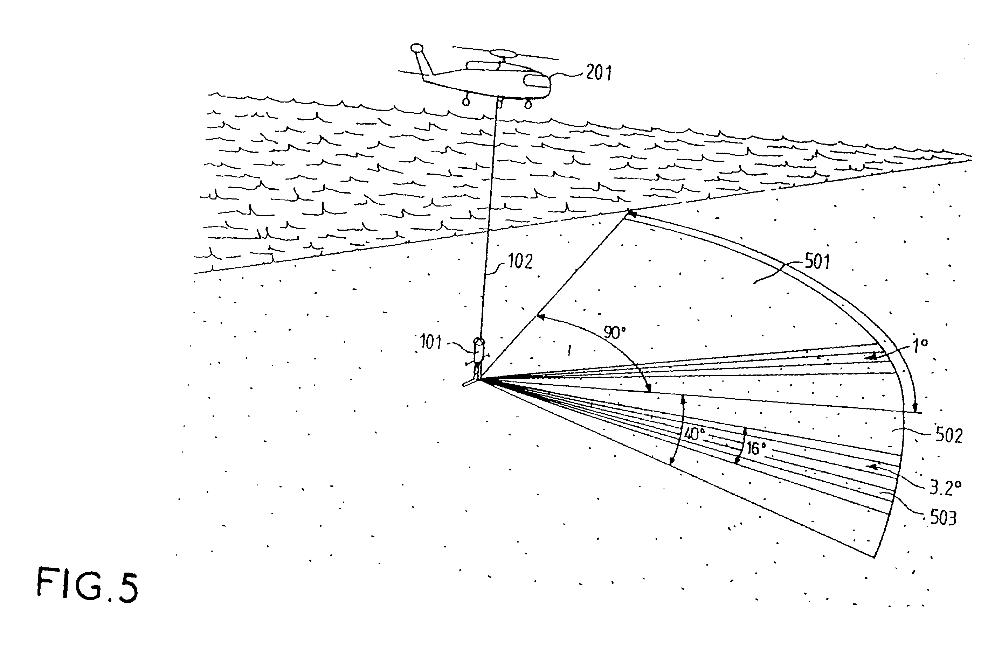

Dans ces conditions, et selon une technique connue on utilisera une émission en fréquence B, permettant d'obtenir à la réception au niveau du fond de la mer, comme représenté sur la figure 5, un secteur d'exploration 501 ouvert de 90° et formé de 90 faisceaux contigus d'ouverture 1°

Pour pouvoir alors déterminer la hauteur des mines à orin au dessus du fond de la mer, on utilisera à l'émission un ensemble de faisceaux 502 relativement étroits contigus et repérable à la réception. Pour cela, chacun de ces faisceaux a une fréquence distincte contenue dans la gamme B. Ce lobe aura par exemple une ouverture de 16° et sera formé de 5 faisceaux d'ouverture 3,2 °. La séparation entre les échos se fera au niveau de la réception par filtrage, selon le principe dit de l'émission colorée. On obtient d'abord la valeur fine du site par interpolation, puis ensuite la hauteur à partir de la distance que l'on connaît par le temps de propagation.

L'ouverture du lobe étant quant même relativement faible, on utilisera les moyens permettant de stabiliser ce lobe en site, décrits plus haut, pour obtenir en outre un balayage électronique en site selon un secteur 504, dont l'ouverture sera par exemple de 40°.

## Revendications

1. Dispositif pour détecter et classifier les mines sous-marines, notamment les mines à orin, du type comprenant un corps cylindrique allongé (101) comportant une antenne d'émission sonar intégrée dans ce corps et une antenne de réception sonar formée de bras déployables accrochés à ce corps et munis d'un ensemble de capteurs de réception, caractérisé en ce que l'antenne de réception sonar est formée de seulement deux bras (107,108) fixés au bas du corps par des articulations (109) permettant de les déployer dans une position perpendiculaire à l'axe du corps pour former une unique antenne de réception sonar horizontale présentant un lobe de réception ayant une ouverture en site large et formant un ensemble de voies juxtaposées couvrant un secteur angulaire en avant de cette antenne, en ce qu'il comprend en outre des moyens permettant de replier ces bras dans deux premières gouttières ménagées sur la face latérale du corps parallèlement à l'axe de ce corps, et en ce que l'antenne d'émission sonar est formée d'au moins une antenne allongée (105) encastrée dans le corps du sonar parallèlement à l'axe de celui-ci pour présenter un lobe d'émission large dans le plan horizontal et relativement étroit dans le plan vertical; cette antenne d'émission étant placée sur la face latérale du corps de manière à ce que son lobe d'émission se combine avec le lobe de réception de l'antenne de réception selon le principe connu des antennes croisées.

2. Dispositif selon la revendication 1, caractérisé en ce que le sonar comprend des moyens d'alimentation de l'antenne d'émission (105) permettant d'obtenir un lobe d'émission formé d'un ensemble de faisceaux relativement étroit contigus et repérables à la réception pour pouvoir, en combinaison avec les caractéristiques de réception de l'antenne de réception, déterminer la hauteur au dessus du fond de la mer des mines à orin immergées entre deux eaux.

3. Dispositif selon l'une quelconque des revendications 1 et 2, caractérisé en ce qu'il comprend en outre deux autres bras (113,114) déployables dans une position perpendiculaire à l'axe du corps et articulés sur ce corps pas des moyens permettant de replier ces bras dans deux autres gouttières (115) ménagées sur la face du corps parallèlement à l'axe de ce corps, et en ce qu'il comprend en outre des moyens de propulsion (111,112) situés à l'extrémité de ces deux autres bras pour permettre, lorsque ces deux autres bras sont déployés, d'orienter le corps en le faisant tourner autour de son axe.

## Patentansprüche

1. Vorrichtung zum Suchen und Klassifizieren von Unterwasserminen, insbesondere vertauten Minen, die einen länglichen zylindrischen Körper (101) mit einer in diesen Körper integrierten Sonar-Sendeantenne und einer von an diesem Körper befestigten und ausfahrbaren Armen gebildeten und eine Gruppe von Empfangssonden enthaltenden sonaren Empfangsantenne, dadurch gekennzeichnet, daß die sonare Empfangsantenne nur aus zwei Armen (107, 108) besteht, die am unteren Ende des Körpers über Gelenke (109) befestigt sind und in eine Position senkrecht zur Achse des Körpers zur Bildung einer einheitlichen sonaren horizontalen Empfangsantenne ausgefahren werden können, die eine Empfangskeule mit einer großen Öffnung in Elevationsrichtung und eine Gruppe von überlagerten Kanälen bildet, die einen Winkelsektor vor dieser Antenne überdeckt, daß die Vorrichtung außerdem Mittel aufweist, mit denen diese Arme in zwei in der Seitenfläche des Körpers parallel zu seiner Achse vverlaufende erste Rinnen eingefahren werden können, und daß die sonare Sendeantenne aus mindestens einer länglichen Antenne (105) besteht, die in dem zylindrischen Körper parallel zu seiner Achse eingearbeitet ist und eine Sendekeule besitzt, die in der waagrechten Ebene breit und in der vertikalen Ebene relativ schmal ist, wobei diese Sendeantenne in der Seitenfläche des Körpers so angeordnet ist, daß ihre Sendekeule mit der Empfangskeule der Empfangsantenne nach dem bekannten Prinzip der gekreuzten Antenne kombiniert wird.

2. Vorrichtung nach Anspruch 1, dadurch gekennzeichnet, daß das Sonargerät Mittel zur Speisung der Sendeantenne (105) enthält, die eine Sendekeule, bestehend aus einer Gruppe von relativ schmalen, aneinander angrenzenden und beim Empfang unterscheidbaren Strahlen zu erhalten erlaubt, um in Kombination mit den Empfangscharakteristika der Empfangsantenne die Höhe über dem Meeresgrund bestimmen zu können, in der sich die vertauten Minen zwischen zwei Wasserschichten befinden.

3. Vorrichtung nach einem beliebigen der Ansprüche 1 und 2, dadurch gekennzeichnet, daß sie außerdem zwei weitere Arme (113, 114) aufweist, die in eine Position senkrecht zur Achse des Körpers ausfahrbar sind und an diesem Körper durch Mittel angelenkt sind, die diese Arme in zwei weitere Rinnen (115) einfahren können, die an der Seitenfläche des Körpers parallel zu seiner Achse vorgesehen sind, und daß die Vorrichtung weiter Antriebsmittel (111, 112) am Ende dieser beiden weiteren Arme besitzt, um den Körper, wenn diese beiden weiteren Arme ausgefahren sind, in Drehung um seine Achse ausrichten zu können.

## Claims

1. Device for detecting and classifying underwater mines, particularly tethered mines, of the type comprising an elongate cylindrical body (101) comprising a sonar emitting antenna incorporated into this body and a sonar receiving antenna formed of deployable arms attached to this body and equipped with a collection of receiving sensors, characterized in that the sonar receiving antenna is formed of just two arms (107, 108) fixed to the bottom of the body by articulations (109) allowing them to be deployed into a position perpendicular to the axis of the body so as to form a single horizontal sonar receiving antenna with a receiving lobe which has a broad aperture in terms of elevation and forms a collection of juxtaposed channels covering an angular sector forward of this antenna, and in that it further comprises means allowing these arms to be folded back into two first channels formed on the lateral face of the body parallel to the axis of this body, and in that the sonar emitting antenna is formed of at least one elongate antenna (105) set into the body of the sonar parallel to the axis thereof so as to exhibit an emitting lobe which is broad in the horizontal plane and relatively narrow in the vertical plane; this emitting antenna being placed on the lateral face of the body in such a way that its emitting lobe combines with the receiving lobe of the receiving antenna according to the known principle of crossed antennas.

2. Device according to Claim 1, characterized in that the sonar comprises means for powering the emitting antenna (105) making it possible to obtain an emitting lobe formed of a collection of relatively narrow contiguous beams which can be identified on reception so as to be able, in combination with the reception characteristics of the receiving antenna, to determine the height above the seabed of tethered mines which are submerged with water above and below them.

3. Device according to either one of Claims 1 and 2, characterized in that it further comprises two other arms (113, 114) deployable into a position perpendicular to the axis of the body and articulated to this body by means allowing these arms to be folded back into two third channels (115) formed in the face of the body parallel to the axis of this body, and in that it further comprises propulsion means (111, 112) located at the end of these two other arms to allow the body to be orientated when these two other arms are deployed, by making the body rotate about its axis.
